# EUROPÄISCHE PATENTSCHRIFT

(11) **EP 0 555 444 B1**
(45) Veröffentlichungstag und Bekanntmachung des Hinweises auf die Patenterteilung: **29.10.1997**
(21) Anmeldenummer: 92918225.1
(22) Anmeldetag: 29.08.1992
(51) Int. Cl.: G01N 27/90

(54) **VERFAHREN ZUR ÜBERPRÜFUNG DER WÄRMETAUSCHERROHRE IN EINEM WÄRMETAUSCHER**
PROCESS FOR INSPECTING HEAT EXCHANGER TUBES IN A HEAT EXCHANGER
PROCEDE POUR INSPECTER DES TUBES ECHANGEURS DE CHALEUR DANS UN ECHANGEUR THERMIQUE

(30) Priorität: 02.09.1991 DE 4129153
(43) Veröffentlichungstag der Anmeldung: 18.08.1993
(73) Patentinhaber: GEMEINSCHAFTSKERNKRAFTWERK NECKAR GmbH (GKN), D-74380 Neckarwestheim (DE)
(72) Erfinder: KOLDITZ, Joachim, D-7129 Talheim (DE)
(74) Vertreter: Wasmuth, Rolf, Dipl.-Ing.
(86) Internationale Anmeldenummer: EP9201997
(87) Internationale Veröffentlichungsnummer: WO9305391

(56) Entgegenhaltungen:
- EP-A- 0 156 020
- EP-A- 0 224 230
- EP-A- 0 259 669
- DE-A- 3 447 781
- GB-A- 2 010 492
- US-A- 3 694 740

## Beschreibung

Die Erfindung betrifft ein Verfahren zur Überprüfung der Wärmetauscherrohre in einem Wärmetauscher nach dem Oberbegriff des Anspruches 1.

Ein Dampferzeuger im Primärkreislauf eines Kernkraftwerkes weist ca. 3.000 bis 6.000 Wärmetauscherrohre auf, die über ihre Länge mit 5 bis 10 Abstandshaltern in ihrer Lage fixiert sind. Die Abstandshalter haben vorgegebene feste Abstände und stützen ein Rohr über einen Teilumfang ab. Lockern oder verschieben sich die Abstandshalter im Betrieb, so können die Wärmetauscherrohre zu unerwünschten Schwingungen angeregt werden, die zu einer vorzeitigen Materialermüdung bzw. zu Wanddickenschwächungen des Rohres führen. Die Schwingungen können derart stark sein, daß Wärmetauscherrohre mechanisch aneinander stoßen und Leckagen auftreten. In einem Kernkraftwerk ist jedoch zwingend erforderlich, daß der radioaktiv belastete Primärkreislauf gas- und flüssigkeitsdicht vom Sekundärkreislauf getrennt bleibt. Daher wird ein derartiger Wärmetauscher regelmäßig wiederkehrenden Prüfungen unterzogen.

Aus der GB-A-2 010 492 ist ein Verfahren zur Überprüfung eines Wärmetauschers mittels des Wirbelstromverfahrens vorgeschlagen, um so in den Wänden eines einzelnen Wärmetauscherrohres bestehende Defekte aufzuspüren. Hierzu wird in jedes Wärmetauscherrohr eine Wirbelstrom-Meßsonde eingeführt, deren elektromagnetisches Wechselfeld vorgebbarer Frequenz in der Rohrwand örtliche Wirbelströme erzeugt, die in einem mitgeführten Sensor Spannungssignale induzieren. Durch Drehung des Sensors in Umfangsrichtung des Rohres und durch Führung längs des Wärmetauscherrohres wird jeder Punkt der Rohrwandung durch den Wirbelstromsensor abgetastet. Bei gleichmäßiger Wanddicke und homogenem Material gibt der Wirbelstromsensor ein gleichmäßiges, in etwa konstantes Signal ab. Wanddickenschwächungen, Materialrisse oder dgl. führen zu einem geänderten Sensorausgangssignal und können so erkannt und örtlich fixiert werden. Die Vorrichtung ist so abgestimmt, daß Änderungen des Sensorausgangssignals durch andere Einflüsse wie zum Beispiel durch Abstandshalter unterdrückt werden, da sie die Auswertung des Signals zur Erkennung des Zustandes der Rohrwandung behindern.

Nachteilig ist, daß mit dem bekannten Verfahren erst die Folgeschäden erfaßt werden können, die durch einen losen oder falsch stehenden Abstandshalter ausgelöst werden. Auch kann zum Beispiel der Fall auftreten, daß zunächst nur ein Abstandshalter längs eines Wärmetauscherrohres locker ist und die dadurch möglichen Schwingungen des Rohres zunächst zu keinen signifikanten Änderungen in der Wanddicke bzw. des Materialzustandes führen. Diese kritische Stelle des Wärmetauschers kann mit dem bekannten Verfahren nicht erkannt werden. Lockert sich zusätzlich ein dem losen Abstandshalter benachbarter Abstandshalter, ist ein relativ langer Abschnitt des Wärmetauscherrohres unzureichend abgestützt und neigt zu mitunter erheblichen Schwingungen, die innerhalb kürzester Zeit zu einem Bruch und somit zur radioaktiven Verunreinigung des Sekundärkreislaufes führen können. In der Praxis ist ein derartiger Fall bei einem Kernkraftwerk in Japan aufgetreten.

Der Erfindung liegt die Aufgabe zugrunde, ein Verfahren zur Überprüfung der Wärmetauscherrohre in einem Wärmetauscher anzugeben, mit dem frühzeitig Schäden am Dampferzeuger erkannt werden können.

Die Aufgabe wird erfindungsgemäß nach den kennzeichnenden Merkmalen des Anspruches 1 gelöst.

Entgegen der Lehre der GB-A-2 010 492 sind nicht ausschließlich die Rohrwandungen auf Wanddickenschwächungen, Risse oder Fehlstellen abzutasten, sondern mit der zur Überprüfung der Wandbeschaffenheit bei Wärmetauscherrohren vorgesehenen Wirbelstromsonde die Abstandshalter, die außerhalb der Wärmetauscherrohre angeordnet sind, in ihrer Lage zu überprüfen. Die bisher ausgeblendeten bzw. unterdrückten Signale der Abstandshalter sind erfindungsgemäß aufzubereiten und auszuwerten, um so Rückschlüsse auf den Zustand und die Lage der außerhalb der Wärmetauscherrohre angeordneten Abstandshalter ziehen zu können. Dadurch können frühzeitig nicht korrekt sitzende Abstandshalter erkannt und entsprechende Gegenmaßnahmen eingeleitet werden, bevor Sekundärschäden an den Wärmetauscherrohren selbst festzustellen sind.

Das bei der örtlichen Abtastung der Rohrwandung auftretende, durch einen Abstandshalter veränderte Spannungssignal des Sensors wird abgespeichert und alle Abstandshaltersignale des Wärmetauschers durch Vergleich mit einem Mustersignal ausgewertet. Das Verfahren basiert auf der Erkenntnis, daß ein fest am Wärmetauscherrohr anliegender Abstandshalter ein Sensorausgangssignal entsprechend einem Mustersignal bedingt und die sich ausbildenden Wirbelströme gestört werden, wenn der Abstandshalter seine Lage ändert oder mit Spiel zur Rohrwandung liegt, wodurch ein anderes Spannungssignal induziert wird.

Die Wirbelstromsonde ist somit derart empfindlich auszubilden und zu betreiben, daß die außerhalb der Wärmetauscherrohre angeordneten Abstandshalter signifikante Änderungen des Sondenausgangssignals bewirken, so daß mit der Wirbelstromsonde eine Überprüfung der Lage und der ordnungsgemäßen Anbindung der außerhalb der Wärmetauscherrohre angeordneten Abstandshalter möglich ist.

Versuche haben gezeigt, daß das im Wirbelstromsensor im Bereich eines Abstandhalters induzierte Spannungssignal in Abhängigkeit von der räumlichen Lage des Abstandhalters sowie von einem eventuellen Spalt zwischen Abstandshalter und Rohr seine Form und Amplitude ändert.

Ergeben sich beim Vergleich signifikante Abweichungen vom Mustersignal, liegt mit hoher Wahrscheinlichkeit ein nicht ordnungsgemäß stehender Abstandshalter vor. Da die Abstandshaltersignale der Reihe nach abgespeichert sind, kann der schadhafte Abstandshalter als der n-te Abstandshalter im i-ten Wärmetauscherrohr identifiziert werden.

Bei einem Wärmetauscher mit etwa 5.000 Wärmetauscherrohren und pro Rohr 5 bis 10 Abstandshaltern müssen ca. 25.000 bis 50.000 Abstandshaltersignale ausgewertet werden. Vorteilhaft ist daher vorgesehen, über die Summe der abgespeicherten Spannungssignale eines Wärmetauschers einen das Mustersignal darstellenden arithmetischen Mittelwert zu bilden und alle Spannungssignale mit diesem Mustersignal zu vergleichen. In Abhängigkeit des Vergleichs werden die einzelnen Spannungssignale nach einer Gauß'schen Verteilungskurve in Abhängigkeit von ihrer Standardabweichung abgelegt. Durch Vorgabe eines Grenzwerts der Standardabweichung können dann die Spannungssignale erkannt werden, die eine signifikante Abweichung zeigen und über dem Grenzwert liegen und daher mit hoher Wahrscheinlichkeit einen falsch sitzenden Abstandshalter anzeigen.

Da bei einer derartigen Überprüfung eines Wärmetauschers eine große Datenmenge zu verarbeiten ist, erfolgt die Auswertung der abgespeicherten Spannungssignale insbesondere rechnergestützt durch einen Computer.

Mit dem erfindungsgemäßen Verfahren können nicht korrekt sitzende Abstandshalter vorzeitig erkannt und Gegenmaßnahmen eingeleitet werden, bevor Sekundärschäden an den Wärmetauscherrohren festgestellt werden können. Die gas- und flüssigkeitsdichte Trennung von Primärkreislauf und Sekundärkreislauf, insbesondere bei einem Dampferzeuger in einem Kernkraftwerk, kann daher mit hoher Sicherheit eingehalten werden.

## Patentansprüche

1. Verfahren zur Überprüfung eines aus Wärmetauscherrohren aufgebauten Wärmetauschers in einem Dampferzeuger im Primärkreislauf eines Kernkraftwerkes, wobei über die Wärmetauscherrohre ein Wärmeübergang von einem ersten Medium auf ein gas- und flüssigkeitsdicht davon getrenntes zweites Medium erfolgt und die Rohre durch Abstandshalter in ihren Lagen fixiert sind und zur Überprüfung des Wärmetauschers eine Meßsonde in ein Wärmetauscherrohr eingeführt wird, über die ein elektromagnetisches Wechselfeld vorgebbarer Frequenz erzeugt wird, durch das sich in der Rohrwandung des zu prüfenden Abschnittes örtliche Wirbelströme ausbilden, die in einem in Längsrichtung des Rohres verschiebbaren und in Umfangsrichtung des Rohres drehbaren Wirbelstromsensor ein Spannungssignal induzieren, das zumindest in Abhängigkeit des Materialzustandes und der Dicke des Rohrwandungsabschnittes örtlich variiert,
dadurch gekennzeichnet, daß jeweils das durch einen Abstandshalter zusätzlich induzierte Spannungssignal des Abstandshalters aufbereitet und abgespeichert wird und alle im Rahmen der Prüfung des Wärmetauschers abgespeicherten Spannungssignale der Abstandshalter der einzelnen Wärmetauscherrohre durch Vergleich mit einem Mustersignal ausgewertet werden.

2. Verfahren nach Anspruch 1,
dadurch gekennzeichnet, daß die Amplitude und/oder die Form des ausgefilterten Spannungssignals ausgewertet wird.

3. Verfahren nach Anspruch 1 oder 2,
dadurch gekennzeichnet, daß das Mustersignal der arithmetische Mittelwert der Summe der Spannungssignale eines Wärmetauschers ist und alle Spannungssignale mit dem Mittelwert verglichen und nach einer Gauß'schen Verteilungskurve abgelegt werden.

4. Verfahren nach einem der Ansprüche 1 bis 3,
dadurch gekennzeichnet, daß die Auswertung der Spannungssignale rechnergestützt mit einem Computer erfolgt.

## Claims

1. Process for inspecting a heat exchanger composed of heat exchanger tubes in a steam generator in the primary circuit of a nuclear power station, in which case by way of the heat exchanger tubes a heat transfer takes place from a first medium to a second medium separated therefrom in a gas-tight and liquid-tight manner and the tubes are fixed in their positions by spacer members and for inspecting the heat exchanger a measuring probe is introduced into a heat exchanger tube, by which probe an electromagnetic alternating field is produced, whereof the frequency can be predetermined, due to which local eddy currents are formed in the tube wall of the section to be inspected, which in an eddy current sensor able to be displaced in the longitudinal direction of the tube and able to rotate in the peripheral direction of the tube induce a voltage signal, which varies locally at least depending on the condition of the material and the thickness of the tube wall section, characterised in that in each case the voltage signal of the spacer member additionally induced by a spacer member is processed and memorised and all the voltage signals of the spacer members of the individual heat exchanger tubes memorised within the framework of the inspection of the heat exchanger are evaluated by comparison with a sample signal.

2. Process according to Claim 1, characterised in that the amplitude and/or the shape of the filtered voltage signal is evaluated.

3. Process according to Claim 1 or 2, characterised in that the sample signal is the arithmetic mean value of the sum of the voltage signals of a heat exchanger and all voltage signals are compared with the mean value and plotted according to a Gaussian distribution curve.

4. Process according to one of Claims 1 to 3, characterised in that the evaluation of the voltage signals takes place in a computer-assisted manner by a computer.

## Revendications

1. Procédé d'inspection d'un échangeur de chaleur constitué par des tubes échangeurs de chaleur, dans un générateur de vapeur placé dans le circuit primaire d'une centrale nucléaire, les tubes échangeurs de chaleur assurant un transfert de chaleur d'un premier milieu à un second milieu séparé de manière étanche aux gaz et aux liquides de ce dernier et les tubes étant fixés dans leurs positions par des écarteurs, pour l'inspection de l'échangeur de chaleur, une sonde de mesure étant introduite dans un tube échangeur de chaleur, par l'intermédiaire de laquelle est produit un champ électromagnétique alternatif d'une fréquence pouvant être prédéterminée, qui provoque dans la paroi du tube de la section à contrôler la formation de courants de Foucault locaux lesquels induisent dans un détecteur de courant de Foucault pouvant être déplacé dans le sens longitudinal du tube et tourné dans le sens circonférentiel du tube, un signal de tension qui varie localement au moins en fonction de l'état du matériau et de l'épaisseur de la section de paroi de tube, **caractérisé en ce** que respectivement le signal de tension de l'écarteur induit en supplément par un écarteur est traité et mémorisé, et que tous les signaux de tension des écarteurs des différents tubes échangeurs de chaleur mémorisés dans le cadre de l'inspection de l'échangeur de chaleur sont exploités par comparaison avec un signal de référence.

2. Procédé selon la revendication 1, caractérisé en ce que l'amplitude et/ou la forme du signal de tension filtré sont interprétés.

3. Procédé selon la revendication 1 ou 2, caractérisé en ce que le signal de référence est la moyenne arithmétique de la somme des signaux de tension d'un échangeur de chaleur et que tous les signaux de tension sont comparés à la valeur moyenne et enregistrés selon une courbe de répartition normale.

4. Procédé selon l'une des revendications 1 à 3, caractérisé en ce que l'exploitation des signaux de tension se fait de manière assistée par ordinateur.
